# EUROPÄISCHE PATENTSCHRIFT

(11) **EP 1 924 623 B1**
(45) Veröffentlichungstag und Bekanntmachung des Hinweises auf die Patenterteilung: **27.09.2017**
(21) Anmeldenummer: 06777031.3
(22) Anmeldetag: 23.08.2006
(51) Int. Cl.: C08G 18/28, C08G 18/71, C08G 18/48, C08G 18/75, C08G 18/10, C08G 18/22

(54) **ALKOXYSILAN- UND SPEZIELLE ALLOPHANAT- UND/ODER BIURETGRUPPEN AUFWEISENDE PREPOLYMERE, EIN VERFAHREN ZU IHRER HERSTELLUNG SOWIE IHRE VERWENDUNG**
PREPOLYMERS COMPRISING ALKOXYSILANE AND SPECIAL ALLOPHANATE AND/OR BIURET GROUPS, A METHOD FOR THEIR PREPARATION AND USE THEREOF
PREPOLYMERES CONTENANT DES GROUPES ALCOXYSILANE ET DES GROUPES SPECIAUX ALLOPHANATE ET/OU BIURET, PROCEDE POUR LES PRODUIRE ET LEUR UTILISATION

(30) Priorität: 03.09.2005 DE 102005041954
(43) Veröffentlichungstag der Anmeldung: 28.05.2008
(73) Patentinhaber: Covestro Deutschland AG, 51373 Leverkusen (DE)
(72) Erfinder: LUDEWIG, Michael, 51373 Leverkusen (DE); MATNER,Mathias, 41464 Neuss (DE)
(74) Vertreter: Levpat
(86) Internationale Anmeldenummer: PCT/EP2006/008274
(87) Internationale Veröffentlichungsnummer: WO 2007/025667

(56) Entgegenhaltungen:
- EP-A1- 1 970 411
- EP-A2- 0 372 561
- EP-A2- 0 406 160
- DE-A1- 2 243 628
- DE-A1- 2 653 286
- DE-A1- 3 410 582
- US-A1- 2002 169 255
- "Polyurethane" In: "Römpp Lexikon Chemie 10. Auflage, Band 5", 1 January 1998 (1998-01-01), Georg Thieme Verlag, Stuttgart, New York, XP055036812, ISBN: 978-3-13-735010-1 pages 3512-3513,
- Römpp: Polyurethane, Aktualisierung von 2008
- Anonymous: "3-Isocyanatopropyltrimethoxysilane | CasNO.15396-00-6", , 5 July 2016 (2016-07-05), XP055285810, Retrieved from the Internet: URL:http://www.lookchem.com/3-Isocyanatopr opyltrimethoxysilane/ [retrieved on 2016-07-05]

## Beschreibung

Die vorliegende Erfindung betrifft alkoxysilangruppenaufweisende Prepolymere, die durch Allophanatisierung und/oder Biuretisierung modifiziert sind und deren Allophanat- bzw. Biuretstruktur mindestens einen silanfunktionellen oder unfunktionellen Alkyl- oder Arylrest trägt, ein Verfahren zu ihrer Herstellung und ihre Anwendung als Bindemittel für Klebstoffe, Dichtstoffe, Primer oder Beschichtungen.

Alkoxysilanfunktionelle Polyurethane, die über eine Silanpolykondensation vernetzen, sind lange bekannt. Ein Übersichtsartikel zu dieser Thematik findet sich z.B. in "Adhesives Age" 4/1995, Seite 30 ff. (Autoren: Ta-Min Feng, B. A. Waldmann). Derartige Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet.

Solche alkoxysilanfunktionellen Polyurethane können gemäß US 3,627,722 oder US 3,632,557 hergestellt werden, indem z.B. Polyetherpolyole mit einem Überschuss Polyisocyanat zu einem NCO-haltigen Prepolymer umgesetzt werden, das dann wiederum mit einem aminofunktionellen Alkoxysilan weiter umgesetzt wird. Das entstehende alkoxysilanfunktionelle Prepolymer enthält Harnstoff- und Urethangruppen in hoher Konzentration, die zu einer hohen Viskosität der Produkte führen.

Ein wirksames Konzept, zumindest den Anteil an der Wasserstoffbrückendichte, der durch die Harnstoffgruppen verursacht wird, zu reduzieren, ist es, durch die Verwendung von sekundären Aminosilanen substituierte Harnstoffe zu erzeugen. Dazu wurden verschiedene Verfahren vorgeschlagen; US 3,627,722 und US 3,632,557 verwenden alkylsubstituierte Aminosilane, US 4,067,844 addiert Acrylate an das primäre Aminosilan, EP-A 596 360 addiert Maleinsäureester an das primäre Aminosilan und EP-A 676 403 führt arylsubstituierte Aminosilane ein. All diese Verfahren können aber nur ein Wasserstoffatom an der terminalen Harnstoffgruppe ersetzen, alle weiteren Harnstoff- und Urethanprotonen tragen über Wasserstoffbrückenbindungen weiter zu einer hohen Viskosität bei.

Ein ebenfalls zweckmäßiges Konzept zur Verringerung der Dichte der Wasserstoffbrückenbindungen und damit der Viskosität wird in EP-A 372 561 offenbart. Dabei werden möglichst langkettige Polyetherpolyole bei einer geringen Vorverlängerung durch die Umsetzung mit dem Polyisocyanat verwendet. Dazu sind Polyether notwendig, die durch spezielle Herstellungsverfahren eine hohe Funktionalität bei einer geringen Unsättigung und Polydispersität haben. Weitere Aspekte dieser Technologie werden in WO 99/48942 und WO 00/26271 beleuchtet. Allerdings führt dieses Prinzip nur bei sehr langkettigen, für niedermodulige Bindemittel konzipierten Prepolymeren zu einen signifikanten Effekt und kann auch hier nur einen Teil der Wasserstoffbrückenbindungsdichte eliminieren.

US 4,345,053 lehrt eine weitere Möglichkeit zur Verringerung der Urethan- und damit Wasserstoffbrückenbindungsdichte. Hier wird OH-funktionelles Prepolymer durch ein isocyanatfunktionelles Alkoxysilan terminiert, was letztlich die Einsparung einer Harnstoff-Gruppe pro Terminierung bedeutet. Allerdings enthält das OH-funktionelle Prepolymer noch Urethangruppen, die aus der Vorverlängerung eines Polyetherpolyols mit Diisocyanat resultieren. Diese können, wie ebenfalls in EP-A 372 561 offenbart, eingespart werden, indem speziell hergestellte langkettige Polyether mit einer geringen Unsättigung und Polydispersität eingesetzt werden. Nachteilig an diesem Vorgehen ist einerseits, dass es sich bei den hierzu benötigten Isocyanatosilanen um schwer verfügbare und daher teure Verbindungen handelt, die auch zu Nebenreaktionen mit den OH-Gruppen der Polyether neigen und andererseits auch hier nur ein Teil der viskositätserhöhenden Urethangruppen eliminiert werden kann.

Die Tatsache, dass Polyisocyanate mit Allophanatstrukturen verglichen mit Analogen ohne Allophanatstrukturen relativ niedrigviskos sind, wird in der Literatur vielfältig, beispielsweise in EP-B 0 682 012, beschrieben.

In der Technik werden diese durch Umsetzung eines ein- oder mehrwertigen Alkohols mit großen Mengen an überschüssigem aromatischen, aliphatischen und/oder cycloaliphatischen Diisocyanat hergestellt (vgl. GB-A 994 890, US 3,769,318, EP-A 0 000 194 oder EP-A 0 712 840). Hier werden ausschließlich Di- oder Polyisocyanate eingesetzt, um wiederum ein isocyanatfunktionelles Bindemittel zu erhalten. Um eine vorzeitige Vernetzung zu unterbinden, ist es notwendig, einen Überschuss an Polyisocyanat zu verwenden, der nach erfolgter Urethanisierung und Allophanatisierung mittels Abdestillation im Vakuum entfernt werden muss. Bei diesem Konzept ist über den Allophanat-Stickstoff eine weitere Isocyanat-Gruppe als funktionelle Gruppe verknüpft.

Es ist ebenfalls möglich, Allophanate indirekt, aus anderen Isocyanatderivaten als Urethanen und Isocyanaten herzustellen. So beschreibt die EP-A 0 825 211 ein Verfahren zum Aufbau von Allophanatstrukturen aus Oxadiazintrionen; ein weiterer Weg ist die Öffnung von Uretdionen (vgl. Proceedings of the International Waterborne, High-Solids, and Powder Coatings Symposium 2001, 28th, 405-419 sowie US-A2003 0153713) zu Allophanat-Strukturen. Beide Wege benötigen allerdings veredelte Rohstoffe als Ausgangsmaterial und führen nur zu einem an Nebenprodukten reichen Allophanatprodukt. Auch werden beim Aufbau der Vorstufen ausschließlich mindestens difunktionelle Polyisocyanate eingesetzt.

Auch die Verwendung von Monoisocyanaten wurde schon im Zusammenhang mit der Allophanatchemie offenbart. In den Anmeldungen US 5,663,272 und US 5,567,793 wird Phenylisocyanat verwendet, um nach Umsetzung mit einem polyfunktionellen Alkohol zu einem NCO- ond OH-Gruppen-freien Urethan zu gelangen, das anschließend durch Allophanatisierung mit speziellen MDI-Typen zu einem flüssigen MDI-Polyisocyanat modifiziert wird. Bei dieser Vorgehensweise enthält das Produkt vor der Weiterverarbeitung monomeres Diisocyanat.

Aufgabe der vorliegenden Erfindung war es nun, modifizierte alkoxysilangruppenaufweisende Polyurethanprepolymere bereitzustellen, die eine gegenüber dem Stand der Technik deutlich reduzierte Viskosität aufweisen.

Es wurde nun gefunden, dass sich derartige Prepolymere auf recht einfache Weise herstellen lassen, indem man Urethangruppen und/oder Harnstoffgruppen eines Polyurethanprepolymers, welches alkoxysilangruppenhaltig sein kann, mit Monoisocyanaten unter anteiliger oder vollständiger Allophanatisierung bzw. Biuretisierung dieser Gruppen umsetzt.

Das Monoisocyanat kann dabei selbst alkoxysilangruppenhaltig sein, so dass sich auch aus alkoxysilangruppenfreien Polyurethanprepolymeren silanmodifizierte Prepolymere erhalten lassen.

Gegenstand der Erfindung sind daher Verfahren zur Herstellung modifizierter alkoxysilangruppenhaltiger Polyurethan-Prepolymere mit Allophanat- und/oder Biuretstrukturen, deren Allophanat- und/oder Biuretstrukturen zu wenigstens 10 mol-% von Butyl- oder Hexylisocyanat der Formel R-NCO abgeleitet sind, wobei R ein C₄- oder C₆-Alkylrest ist oder 3-Isocyanatopropyltrimethoxysilan als alkoxysilanfunktionellem Monoisocyanat.

Gegenstand der Erfindung sind daher Verfahren zur Herstellung von alkoxysilangruppenhaltigen Polyurethan-Prepolymeren mit Allophanat- und/oder Biuretstrukturen, deren Allophanat- und/oder Biuretstrukturen zu wenigstens 10 mol-% von Butylisocyanat oder Hexylisocyanat als nichtfunktionelle Monoisocyanate oder 3-Isocyanatopropyltrimethoxysilan als alkoxysilanfunktionellem Monoisocyanat abgeleitet sind, indem entweder
A) Urethangruppen und/oder Harnstoffgruppen eines Alkoxysilangruppen enthaltenden Polyurethanprepolymers ganz oder teilweise mit Butylisocyanat, Hexylisocyanat oder 3-Isocyanatopropyltrimethoxysilan zu Allophanatgruppen bzw. Biuretgruppen umgesetzt werden
   oder
B) Urethangruppen und/oder Harnstoffgruppen eines Alkoxysilylgruppen-freien Polyurethanprepolymers ganz oder teilweise mit 3-Isocyanatopropyltrimethoxysilan zu Allophanatgruppen bzw. Biuretgruppen umgesetzt werden.

Als nichtfunktionelle Monoisocyanate eignen sich n-Butylisocyanat und n-Hexylisocyanat.

Ebenfalls ist es denkbar, hier Polyisocyanate zu verwenden, bei denen alle, bis auf eine NCO-Gruppe mit einer NCO-reaktiven Verbindung umgesetzt wurden. Solche Verbindungen sind aber nicht bevorzugt.

Als alkoxysilanfunktionelles Monoisocyanat kann 3-Isocyanatopropyltrimethoxysilan eingesetzt werden.

Auch hier ist es denkbar, isocyanatfianktionelle Silane zu verwenden, die durch Umsetzung eines Diisocyanates mit einem Amino- oder Thiosilan hergestellt wurden. Solche Verbindungen sind aber nicht bevorzugt.

Das für die Allophanatbildung eingesetzte Monoisocyanat kann bezogen auf die vorhandenen Urethangruppen der Ausgangsverbindung im Unterschuss, äquimolar wie auch im Überschuss eingesetzt werden. In letzterem Fall muss das überschüssige Monoisocyanat nach vollendeter Reaktion nach einer dem Fachmann bekannten Methode, wie z.B. der Destillation oder Extraktion abgetrennt werden. Bevorzugt ist es daher, pro 1,0 mol Urethan- und Harnstoffgruppen der Ausgangsverbindung 0,1 bis 1,0 mol Monoisocyanat einzusetzen, besonders bevorzugt ist dabei der Einsatz von 0,5 bis 1,0 mol Monoisocyanat.

Die Allophanat- bzw. Biuretbildung der Urethan- bzw. Harnstoffgruppen durch die Monoisocyanate wird bevorzugt unter Einsatz von Katalysatoren durchgeführt.

Als Allophanatisierungs- oder Biuretisierungskatalysatoren können dem Fachmann an sich hierfür bekannten Verbindungen, wie die Zinksalze Zinkoctoat, Zinkacetylacetonat und Zink-2-ethylcaproat, oder Tetraalkylammoniumverbindungen, wie *N,N,N-*Trimethyl-*N-*2-hydroxypropylammo-niumhydroxid, *N,N,N-*Trimethyl-*N-*2-hydroxypropylammonium-2-ethylhexanoat oder Cholin-2-ethylhexanoat verwendet werden. Bevorzugt ist die Verwendung von Zinkoctoat (Zink-2-ethyl-hexanoat) und der Tetraalkylammoniumverbindungen, besonders bevorzugt diejenige von Zinkoctoat.

Der Katalysator wird in Mengen von 0,001 bis 5,0 Gew.-%, bevorzugt 0,01 bis 1,0 Gew.-% und besonders bevorzugt 0,05 bis 0,5 Gew.-% bezogen auf Festgehalt des Verfahrensprodukts eingesetzt.

Der Allophanatisierungskatalysator kann in einer Portion oder aber auch portionsweise oder auch kontinuierlich zugegeben werden. Bevorzugt ist Zugabe der gesamten Menge in einer Portion.

Es ist auch möglich den Allophanatisierungskatalysator nach dem Fachmann bekannten Methoden auf Trägermaterialien zu bringen und als heterogene Katalysatoren zu verwenden.

Für den bevorzugten Fall, dass das für die Allophanat-/Biuretbildung eingesetzte Monoisocyanat bezogen auf die vorhandenen Urethan-/Harnstoffgruppen der Ausgangsverbindung im Unterschuss, oder äquimolar eingesetzt wird, ist es bevorzugt, die Reaktion der Allophanatisierung solange zu führen, bis der NCO-Gehalt des Produktes unter 1,0 Gew.-%, besonders bevorzugt unter 0,5 Gew.-% liegt. Es ist für den weniger bevorzugten Fall, dass das für die Allophanatbildung eingesetzte Monoisocyanat bezogen auf die vorhandenen Urethan-/Harnstoffgruppen der Ausgangsverbindung im Überschuss eingesetzt wird, aber durchaus denkbar, eine NCO-haltige Ausgangsverbindung zu verwenden und die Reaktion der Allophanatisierung solange zu führen, bis der gewünschte NCO-Gehalt der Zielverbindung erreicht ist. In diesem Fall muss das überschüssige Monoisocyanat nach vollendeter Reaktion nach einer dem Fachmann bekannten Methode, wie z.B. der Destillation oder Extraktion, abgetrennt werden.

Es ist grundsätzlich auch möglich, einen Restgehalt an NCO-Gruppen mit NCO-reaktiven Verbindungen wie z.B. Alkoholen, nach beendeter Modifizierungsreaktion umzusetzen. Dadurch werden Produkte mit ganz besonders niedrigen NCO-Gehalten erhalten.

Die erfindungswesentliche Allophanatisierung bzw. Biuretisierung wird bei Temperaturen von 20 bis 200°C, bevorzugt 20 bis 120°C, besonders bevorzugt von 40 bis 100°C, durchgeführt.

Es ist unerheblich, ob das erfindungsgemäße Verfahrens kontinuierlich z.B. in einem Statik-Mischer, Extruder oder Kneter oder diskontinuierlich z.B. in einem Rührreaktor durchgeführt wird.

Bevorzugt wird das erfindungsgemäße Verfahren in einem Rührreaktor durchgeführt.

Der Verlauf der Reaktion kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehalts, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Bevorzugt ist die IR-Kontrolle auf vorhandene freie NCO Gruppen (für aliphatische NCO-Gruppen, Bande bei ca. v = 2272 cm⁻¹) und GC-Untersuchungen auf nicht umgesetzte NCO-Gruppen.

Bevorzugt basieren mindestens 20 Mol-% , besonders bevorzugt mindestens 40 Mol-% der in den erfindungsgemäßen Verbindungen enthaltenen Allophanat- und/oder Biuretgruppen auf Monoisocyanaten R-NCO.

Urethangruppenhaltige Verbindungen sind üblicherweise durch Umsetzung von isocyanatgruppenhaltigen Verbindungen mit Polyolen in einer gegebenenfalls katalysierten Additionsreaktion zugänglich. Die Herstellung von harnstoffgruppenhaltigen Polymeren erfolgt üblicherweise durch Umsetzung von NCO-Funktionen mit Aminogruppen.

Als isocyanatgruppenhaltige Verbindungen werden typischerweise aromatische, aliphatische und cycloaliphatische Polyisocyanate mit einem zahlenmittleren Molekulargewicht von unter 800 g/mol eingesetzt. Beispielsweise geeignet sind Diisocyanate aus der Reihe 2,4-/2,6-Toluoldiisocyanat (TDI), Methylendiphenyldüsocyanat (MDI), Trüsocyanatononan (TIN), Naphtyldüsocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methylpentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyl-dicyclohexylinethan, 4,4'-Diisocyanatodicyclohexylpropan-(2,2), 3 -Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m- oder -p-xylylen-diisocyanat (TMXDI) sowie aus diesen Verbindungen bestehende Gemische.

Bevorzugte Ausgangsstoffe für die Herstellung der urethangruppenhaltigen Verbindungen sind Hexamethylendiisocyanat (HDI), Isophorondiisocyanat (IPDI) und/oder 4,4'-Diisocyanatodicyclohexylmethan.

Ebenfalls geeignet als isocyanathaltige Verbindungen sind Umsetzungsprodukte der vorgenannten Isocyanate mit sich selbst oder untereinander zu Uretdionen oder Isocyanuraten. Beispielhaft genannt seien Desmodur^{®} N3300, Desmodur^{®} N3400 oder Desmodur^{®} N3600 (alle Bayer MaterialScience, Leverkusen, DE).

Weiterhin geeignet sind auch Derivate von Isocyanaten, wie Allophanate oder Biurete. Beispielhaft genannt seien Desmodur^{®} N100, Desmodur^{®} N75MPA/BA oder Desmodur^{®} VPLS2102 (alle Bayer MaterialScience, Leverkusen, DE).

Funktionalisierte Allophanate können auch gemäß der Lehre der nicht vorveröffentlichten deutschen Patentanmeldung DE 10 200 40 488 73 durch ein Verfahren hergestellt werden, bei dem Isocyanate in einer Eintopf-Reaktion zunächst mit einem Unterschuss einer hydroxyfunktionellen Verbindung urethanisiert werden und dann in einem weiteren Schritt mit einem Allophanatisierungskatalysator zu Allophanaten umgesetzt werden. In diesem Fall ist es einerseits denkbar, die erfindungsgemäße Modifikation anschließend durchzuführen. Bevorzugt ist in diesem Fall aber eine Verfahrensweise, bei der das Monoisocyanat vor dem zweiten Schritt, nach abgeschlossener Urethanisierung, dem Reaktionsgemisch beigemengt wird und die erfindungsgemäße Modifikation parallel mit der Allophanatisierung entsprechend der nicht vorveröffentlichten deutschen Patentanmeldung DE 10 200 40 488 73 durchgeführt wird.

Isocyanate können zusätzlich Verbindungen enthalten, die bei Umsetzung mit Wasser (Hydrolyse) Chlor oder Chlorid freisetzen (Verbindungen mit hydrolisierbarem Chlor). Solche Verbindungen können in dem erfindungsgemäßen Verfahren zu einer Trübung des Harzes und einem unnötig hohen Verbrauch an Katalysator führen. Daher werden bevorzugt Isocyanate verwendet, die einen Gehalt von weniger als 1000 ppm hydrolysierbares Chlor enthalten. Besonders bevorzugt ist die Verwendung von Isocyanaten mit einem Gehalt von weniger als 500 ppm hydrolysierbarem Chlors und ganz besonders diejenige mit einem Gehalt von weniger als 200ppm.

Zur Urethanisierung können nieder- und/oder höhermolekulare Polyole eingesetzt werden.

Als niedermolekulare Polyhydroxylverbindungen können in der Polyurethan-Chemie übliche Polyole, mit Molekulargewichten von 62 bis 399 g/mol, wie Ethylenglykol, Triethylenglykol, Tetraethylenglykol, Propandiol-1,2 und -1,3, Butandiol-1,4 und -1,3, Hexandiol-1,6, Octandiol-1,8, Neopentylglykol, 1,4-Bis(hydroxymethyl)cyclohexan, Bis(hydroxymethyl)tricyclo[5.2.1.0^{2.6}]decan oder 1,4-Bis(2-hydroxy-ethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, Bisphenol A, Tetrabrombisphenol A, Glycerin, Trimethylolpropan, Hexantriol-1,2,6-Butantriol-1,2,4, Pentaerythrit, Chinit, Mannit, Sorbit, Methylglykosid und 4,3,6-Dianhydrohexite verwendet werden.

Höhermolekulare Hydroxylverbindungen umfassen die in der Polyurethan-Chemie üblichen Hydroxypolyester, Hydroxypolyether, Hydroxypolythioether, Hydroxypolyacetale, Hydroxypolycarbonate, Dimerfettalkohole und/oder Esteramide, jeweils mit mittleren Molekulargewichten von 400 bis 20 000 g/mol, bevorzugt solche mit mittleren Molekulargewichten von 2000 bis 18 000 g/mol. Bevorzugte höhermolekulare Hydroxylverbindungen sind Hydroxypolyether, Hydroxypolyester und Hydroxypolycarbonate der vorstehend genannten Art.

Als Polyetherpolyole geeignet sind die in Polyurethan-Chemie üblichen Polyether, wie z.B. die unter Verwendung von zwei- bis sechswertigen Startermolekülen wie Wasser oder den oben genannten Polyolen oder 1- bis 4-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids. Bevorzugt sind im Durchschnitt 2 bis 4 Hydroxylgruppen aufweisende Propylenoxidpolyether, die bis zu 50 Gew.% eingebaute Polyethylenoxid-Einheiten enthalten können. Es ist dabei sowohl denkbar, klassische Polyether, die auf Basis einer Katalyse mit z.B. Kaliumhydroxid hergestellt werden, als auch solche Polyether, die mit den neueren Verfahren auf Basis der Doppelmetallcyanid-Katalysatoren hergestellt werden, einzusetzen. Letztere Polyether haben in der Regel einen besonders niedrigen Gehalt an terminaler Unsättigung von weniger als 0,07meq/g, enthalten deutlich weniger Monole und haben in der Regel eine geringe Polydispersität von weniger als 1,5. Der Einsatz solcher durch Doppelinetallcyanid-Katalyse hergestellten Polyether ist für den Fall der Verwendung von Polyethern bevorzugt.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrbasigen, vorzugsweise zweibasigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer aromatischer und/oder heterocyclischer Natur sein und gegebenenfalls z.B. durch Halogenatome substituiert und/oder ungesättigt sein. Beispielhaft sind genannt Adipinsäure, Phthalsäure, Isophthalsäure, Bernsteinsäure, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester oder Terephthalsäure-bis-glykolester. Bevorzugt sind unterhalb 60°C schmelzende Hydroxypolyester mit 2 oder 3 endständigen OH-Gruppen.

Die in Frage kommenden Polycarbonatpolyole sind durch Reaktion von Kohlensäurederivaten, z.B. Diphenylcarbonat, Dimethylcarbonat oder Phosgen, mit Diolen erhältlich. Als derartige Diole kommen z.B. Ethylenglykol, Triethylenglykol, Tetraethylenglykol, Propandiol-1,2 und -1,3, Butandiol-1,4 und -1,3, Pentandiol-1,5, Hexandiol-1,6, Octandiol-1,8, Neopentylgkylol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Bevorzugt erhält die Diolkomponente 40 bis 100 Gew.% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-A 1 770 245, oder durch Veretherung von Hexandiol mit sich selbst zum Di- oder Trihexylenglykol erhalten wurden. Die Herstellung solcher Derivate ist z.B. aus der DE-A 1 570 540 bekannt. Auch die in der DE-A 3 717 060 beschriebenen Polyether-Polycarbonatdiole können sehr gut eingesetzt werden.

Die Hydroxypolycarbonate sollen im wesentlichen linear sein. Sie können aber auch gegebenenfalls durch den Einbau polyfunktioneller Komponenten, insbesondere niedermolekularer Polyole, leicht verzweigt werden. Hierzu eignen sich beispielsweise Trimethylolpropan, Hexantriol-1,2,6, Glycerin, Butantriol-1,2,4, Pentaerythrit, Chinit, Mannit, Sorbit, Methylglykosid und 4,3,6-Dianhydrohexite.

Die Herstellung der in der Ausführungsform A) benötigten alkoxysilangruppenhaltigen Prepolymere ist prinzipiell bekannt und z.B. in US 3,632,557, EP-A 372 561, EP-A 931 800 oder WO 00/26271 ausführlich beschrieben.

Es ist dabei einerseits möglich, zunächst ein NCO-funktionelles Prepolymer aus den vorstehend genannten Komponenten in einem NCO/OH-Verhältnis von 1,2 : 1 bis 2,0 : 1 aufzubauen, das dann mit einem gegenüber Isocyanaten reaktiven funktionellen Alkoxysilan umgesetzt wird. Andererseits ist es aber auch möglich durch NCO/OH-Verhältnisse von 1 : 1,2 bis 1 : 2 ein OH-funktionelles Prepolymer herzustellen, das dann mit einer isocyanatfunktionellen Silankomponente umgesetzt wird.

Geeignete isocyanatreaktive Silanverbindungen sind dem Fachmann hinlänglich bekannt, beispielhaft genannt seien Aminopropyltrimethoxysilan, Mercaptopropyltrimethoxysilan, Aminopropylmethyldimethoxysilan, Mercaptopropylmethyldimethoxysilan, Aminopropyltriethoxysilan, Mercaptopropyltriethoxysilan, Aminopropylmethyldiethoxysilan, Mercaptopropylmethyldiethoxysilan, Aminomethyltrimethoxysilan, Aminomethyltriethoxysilan, (Aminomethyl)methyldimethoxysilan, (Aminomethyl)methyldiethoxysilan, *N*-Butyl-aminopropyltrimethoxysilan, *N-*Ethyl-aminopropyltrimethoxysilan, *N-*Phenyl-aminopropyltrimethoxysilan, *N-*(3-Triethoxysilylpropyl)asparagin-säurediethylester, *N-*(3-Trimethoxysilylpropyl)asparaginsäurediethylester und *N-*(3-Dimethoxy-methylsilylpropyl)asparaginsäurediethylester. Bevorzugt ist die Verwendung von *N-*(3-Trimethoxy-silylpropyl)asparaginsäurediethylester und Aminopropyltrimethoxysilan.

Die Herstellung der in der zweiten, weniger bevorzugten Variante des erfindungsgemäßen Verfahrens B) benötigten nichtfunktionellen Prepolymere ist für den Fachmann ebenfalls leicht möglich.

Dabei können sowohl NCO-funktionelle Prepolymere, hergestellt aus den vorstehend genannten Verbindungen, durch Monoalkohole verkappt werden, als auch OH-funktionelle Polyole oder Prepolymere durch Monoisocyanate verkappt werden. Bei dieser Ausführungsform des erfindungsgemäßen Verfahrens ist es zwingend notwendig, die Allophanatisierung zur Einführung einer Funktionalität mit einem silanfunktionellen Monoisocyanat R-NCO durchzuführen.

Nach beiden Varianten des erfindungsgemäßen Verfahrens werden pro mol an Urethan- und Harnstoffgruppen der entsprechenden Prepolymere 0,1 mol bis 1,0 mol, vorzugsweise 0,3 mol bis 0,9 mol, an nicht- oder silanfunktionellem Monoisocyanat zugesetzt. Die Allophanatisierung bzw. Biuretisierung wird dann gegebenenfalls in Gegenwart eines Allophanatisierungskatalysators bei 60°C bis 160°C, vorzugsweise 80°C bis 120°C, durchgeführt. Die Reihenfolge der Zugabe der Komponenten ist dabei nicht erheblich. Der Reaktionsansatz zur Vervollständigung der Allophanatisierung bzw. Biuretisierung wird solange weitergerührt, bis der gewünschte NCO-Gehalt des Endproduktes erreicht ist.

Bevorzugt wird die Reaktion der Allophanatisierung solange geführt, bis der NCO-Gehalt des Produktes unter 1,0 Gew.-%, besonders bevorzugt unter 0,5 Gew.-% liegt.

Die erfindungsgemäßen Verbindungen eignen sich sehr gut als Bindemittel zur Herstellung von isocyanatfreien niedermoduligen Polyurethandichtstoffen vorzugsweise für den Baubereich.

Diese Dichtstoffe vernetzen unter Einwirkung von Luftfeuchtigkeit über eine Silanolpolykondensation. Weiterhin eignen sie sich zur Herstellung von Klebstoffen; eine Anwendung in Primern oder Beschichtungen ist ebenfalls denkbar.

Ein weiterer Gegenstand der Erfindung sind daher Dichtstoffe, Klebstoffe, Primer und Beschichtungen basierend auf den erfindungsgemäßen Polyurethanprepolymeren.

Zur Herstellung solcher Dicht- oder Klebstoffe können die erfindungsgemäßen Alkoxysilan-Endgruppen aufweisenden Polyurethanprepolymere zusammen mit üblichen Weichmachern, Füllstoffen, Pigmenten, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren der Dichtstoffherstellung formuliert werden.

Als geeignete Füllstoffe seien beispielhaft Ruß, Fällungskieselsäuren, pyrogene Kieselsäuren, mineralische Kreiden und Fällungskreiden genannt. Als geeignete Weichmacher seien beispielhaft Phthalsäureester, Adipinsäureester, Alkylsulfonsäureester des Phenols oder Phosphorsäureester genannt.

Als Thixotropiermittel seien beispielhaft pyrogene Kieselsäuren, Polyamide, hydrierte Rizinusöl-Folgeprodukte oder auch Polyvinylchlorid genannt.

Als geeignete Katalysatoren zur Aushärtung seien Organozinnverbindungen und aminische Katalysatoren genannt. Als Organozinnverbindungen seien beispielhaft genannt: Dibutylzinndiacetat, Dibutylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder Diazabicyclooctan verwendet werden.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch N-Aminoethyl-3-aminopropyl-trimethoxy und/oder N-Aminoethyl-3-aminopropyl-methyl-dimethoxysilan, Epoxysilane und/oder Mercaptosilane.

Die vernetzten Polymere zeichnen sich aus durch hervorragende Dehnbarkeit bei gleichzeitig niedrigem Modul. Dabei beobachtet man mit sinkendem NCO/OH-Verhältnis bei gleichem Molekulargewicht des Polymers eine Abnahme des Modulus und der Shore-Härte sowie eine Zunahme der Bruchdehnung.

### Beispiele

Alle Prozentangaben beziehen sich, sofern nicht abweichend angegeben, auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden bei 23°C mit einem Platte-Platte Rotationsviskosimeter, Roto-Visko 1 der Firma Haake, DE nach ISO/DIS 3219:1990 durchgeführt.

Die zur Zeit der Versuchsdurchführung herrschende Umgebungstemperatur von 23°C wird als RT bezeichnet.

### Ausgangsprepolymer A und Vergleichsbeispiel für Beispiel 1 und Beispiel 2:

874 g eines Polypropylenglykols der OH-Zahl 14,1 (Acclaim^{®} 8200N, Bayer MaterialScience AG, Leverkusen) wurden sechs Stunden lang im Vakuum (geringer Stickstoffdurchfluss) bei 120°C getrocknet. Dann wurde mit 45,2 g Isophorondiisocyanat (Bayer MaterialScience AG, Leverkusen, DE) (Kennzahl 1,85) bei 60°C unter Zugabe von 50 ppm Dibutylzinndilaurat (Desmorapid Z^{®}, Bayer MaterialScience AG, Leverkusen, DE) bis zum Erreichen des theoretischen NCO-Gehaltes von 0,85 % prepolymerisiert. Anschließend wurden bei 60°C 65,8 g N-(3-Trimethoxysilylpropyl)-asparaginsäure-diethylester (hergestellt gemäß EP-A 596 360, Bsp. 5) zügig zugetropft und es wurde gerührt, bis im IR-Spektrum keine Isocyanatbande mehr zu sehen war. Das erhaltene Alkoxysilyl-Endgruppen aufweisende Polyurethanprepolymer hatte eine Viskosität von 51.000 mPas (23°C).

### Beispiel 1 (erfindungsgemäßes allophanat- und biurethaltiges Bindemittel):

985 g des obigen silanterminierten Prepolymers A wurden bei 60°C zunächst mit 21,8 g Butylisocyanat (Lanxess, Leverkusen, Gehalt an hydrolysierbarem Chlor ca. 100 ppm) und dann mit 2,0 g Zinkoctoat (Zink-2-ethylhexanoat, Octa-Soligen Zink 22, Borchers, Monheim, DE) versetzt und weiter auf 100°C erwärmt. Nach 5 h war nur noch ein Rest-NCO-Gehalt von 0,04 % nachweisbar und die Reaktion wurde beendet. Es wurde ein durch Allophanatisierung modifiziertes silangruppenaufweisendes Prepolymer mit einer Viskosität von 29.500 mPas (23°C) erhalten.

### Beispiel 2 (erfindungsgemäßes allophanat- und biurethaltiges Bindemittel):

1036 g des silanterminierten Prepolymers A wurden bei 60°C zunächst mit 50,3 g Isocyanatopropyltrimethoxysilan (A-link 35^{®}, GE Advanced Materials, Wilton, Connecticut, USA) und dann mit 2,1 g Zinkoctoat (Zink-2-ethylhexanoat, Octa-Soligen Zink 22, Borchers, Monheim, DE) versetzt und weiter auf 100°C erwärmt. Nach 5 h war nur noch ein Rest-NCO-Gehalt von 0,08 % nachweisbar und die Reaktion wurde beendet. Es wurde ein durch Allophanatisierung modifiziertes silangruppenaufweisendes Prepolymer mit einer Viskosität von 20.500 mPas (23°C) erhalten.

### Ausgangsprepolymer B und Vergleichsbeispiel für Beispiel 3:

874 g eines Polypropylenglykols der OH-Zahl 14,1 (Acclaim^{®} 8200N, Bayer MaterialScience AG, Leverkusen, DE) wurden sechs Stunden lang im Vakuum (geringer Stickstoffdurchfluss) bei 120°C getrocknet. Dann wurde mit 45,2 g Isophorondiisocyanat (Bayer MaterialScience AG, Leverkusen) (Kennzahl 1,85) bei 60°C unter Zugabe von 50 ppm Dibutylzinndilaurat (Desmorapid Z^{®}, Bayer MaterialScience AG, Leverkusen, DE) bis zum Erreichen des theoretischen NCO-Gehaltes von 0,85 % prepolymerisiert. Anschließend wurden bei 60°C 33,5 g Aminopropyltrimethoxysilan (A-1110^{®}, GE Advanced Materials, Wilton, Connecticut, USA) zügig zugetropft und es wurde gerührt, bis im IR-Spektrum keine Isocyanatbande mehr zu sehen war. Das erhaltene alkoxysilanendgruppenaufweisende Polyurethanprepolymer hatte eine Viskosität von 150.000 mPas (23°C).

### Beispiel 3 (erfindungsgemäßes allophanat- und biurethaltiges Bindemittel):

Das obige silanterminierte Prepolymer B wurde bei 60°C zunächst mit 21,8 g Butylisocyanat und dann mit 2,0 g Zinkoctoat versetzt und weiter auf 100°C erwärmt. Nach 5h war nur noch ein Rest-NCO-Gehalt von 0,05 % nachweisbar und die Reaktion wurde beendet. Es wurde ein durch Allophanatisierung und Biuretisierung modifiziertes silangruppenaufweisendes Prepolymer mit einer Viskosität von 72.000 mPas (23°C) erhalten.

### Beispiel 4 (erfindungsgemäßes allophanathaltiges Bindemittel):

914 g eines Polypropylenglykols der OH-Zahl 14,1 (Acclaim^{®} 8200N, Bayer MaterialScience AG, Leverkusen) wurden sechs Stunden lang im Vakuum (geringer Stickstoffdurchfluss) bei 120°C getrocknet. Dann wurde mit 47,2 g Isophorondiisocyanat (Bayer MaterialScience AG, Leverkusen, DE) (Kennzahl 1,85) bei 60°C unter Zugabe von 50 ppm Dibutylzinndilaurat (Desmorapid Z^{®}, Bayer MaterialScience AG, Leverkusen, DE) bis zum Erreichen des theoretischen NCO-Gehaltes von 0,85 % prepolymerisiert. Anschließend wurden bei 60°C 14,47 g 1-Butanol zügig zugetropft und es wurde gerührt, bis im IR-Spektrum keine Isocyanatbande mehr zu sehen war. Zu dem so erhaltenen nicht-funktionellen Polyurethanprepolymer wurden bei 60°C zunächst 50,31 g Isocyanatopropyltrimethoxysilan (A-link 35^{®}, GE Advanced Materials, Wilton, Connecticut, USA) und dann 1,0 g Zinkoctooat (Zink-2-ethylhexanoat, Octa-Soligen Zink 22, Borchers, Monheim, DE) beigemengt, und es wurde weiter auf 100°C erwärmt. Nach 5 h war nur noch ein Rest-NCO-Gehalt von 0,12 % nachweisbar und die Reaktion wurde beendet. Es wurde ein durch Allophanatisierung modifiziertes silangruppenaufweisendes Prepolymer mit einer Viskosität von 57.700 mPas (23°C) erhalten.

### Beispiel 5 (erfindungsgemäßes allophanathaltiges Bindemittel):

507,2 g eines Polypropylenglykols der OH-Zahl 28 (Acclaim^{®} 4200, Bayer MaterialScience AG, Leverkusen) wurden sechs Stunden lang im Vakuum (geringer Stickstoffdurchfluss) bei 120°C getrocknet. Dieses wurde mit 14,07 g Isophorondiisocyanat bei 80°C unter Zugabe von 200 ppm Dibutylzinndilaurat (Desmorapid Z^{®}, Bayer MaterialScience AG, Leverkusen, DE) bis zum vollständigen Abbau des NCO-Gehaltes umgesetzt. Zu dem so erhaltenen OH-funktionellen Polyurethanprepolymer wurden bei 80°C 77,41 g Isocyanatopropyltrimethoxysilan (A-link 35^{®}, GE Advanced Materials, Wilton, Connecticut, USA) zugesetzt und bis zu einem NCO-Gehalt von 1,1 % gerührt. Dann wurden 1,2 g Zinkoctooat (Zink-2-ethylhexanoat, Octa-Soligen Zink 22, Borchers, Monheim, DE) beigemengt, und es wurde weiter auf 100°C erwärmt. Nach 6 h war kein Rest-NCO-Gehalt mehr nachweisbar. Es wurde ein durch Allophanatisierung modifiziertes silangruppenaufweisendes Prepolymer mit einer Viskosität von 15.000 mPas (23°C) erhalten.

**Zusammenfassung:**

| Bsp. | Prepolymerverkappung | Viskosität ohne Modifizierung | Monoisocyanat | Viskosität mit Modifizierung |
|---|---|---|---|---|
| 1 | NCO-Prepolymer + Aminosilan | 51.000 mPas | Butylisocyanat | 29.500 mPas |
| 2 | NCO-Prepolymer + Aminosilan | 51.000 mPas | Isocyanatosilan | 20.500 mPas |
| 3 | NCO-Prepolymer + Aminosilan | 150.000 mPas | Butylisocyanat | 72.000 mPas |
| 4 | NCO-Prepolymer + Butanol | kein STP | Isocyanatosilan | 57.700 mPas |
| 5 | OH-terminiertes Prepolymer+Isocyanatosilan | in situ Reaktion | Isocyanatosilan | 15.000 mPas |

Die Beispiele 1 bis 3 zeigen deutlich den Viskositätsvorteil, der sich durch die zusätzliche Allophanatisierung erzielen lässt. Beim Beispiel 2 wird dabei eine zusätzliche Silanfunktionalität eingebaut. Beispiel 4 zeigt eine neue Syntheseroute zu silanterminierten Prepolymeren, die ohne Allophanatisierung nicht möglich sind. Das Beispiel 5 zeigt eine Verkappung und sofortige anschließende Allophanatisierung mit Isocyanatosilan. Bei den Beispielen 4 und 5 lässt sich eine Viskosität des STP's vor Modifizierung nicht angeben, da die Silanfunktionalität erst durch die Modifizierung eingebaut wird.

## Patentansprüche

1. Verfahren zur Herstellung von alkoxysilangruppenhaltigen Polyurethan-Prepolymeren mit Allophanat- und/oder Biuretstrukturen, deren Allophanat- und/oder Biuretstrukturen zu wenigstens 10 mol-% von Butylisocyanat oder Hexylisocyanat als nichtfunktionelle Monoisocyanate oder 3-Isocyanatopropyltrimethoxysilan als alkoxysilanfunktionellem Monoisocyanat abgeleitet sind, in dem
entweder
A) Urethangruppen und/oder Harnstoffgruppen eines Alkoxysilangruppen enthaltenden Polyurethanprepolymers ganz oder teilweise mit Butylisocyanat, Hexylisocyanat oder 3-Isocyanatopropyltrimethoxysilan zu Allophanatgruppen bzw. Biuretgruppen umgesetzt werden
oder
B) Urethangruppen und/oder Harnstoffgruppen eines Alkoxysilangruppen-freien Polyurethanprepolymers ganz oder teilweise mit 3-Isocyanatopropyltrimethoxysilan zu Allophanatgruppen bzw. Biuretgruppen umgesetzt werden.

2. Verfahren gemäß Anspruch 1, **dadurch gekennzeichnet, dass** Katalysatoren mitverwendet werden.

3. Verfahren gemäß Anspruch 2, **dadurch gekennzeichnet, dass** als Katalysator Zinkoctoat (Zink-2-ethylhexanoat) oder Tetraalkylammoniumverbindungen verwendet werden.

4. Verfahren gemäß einem der Ansprüche 1 bis 3, **dadurch gekennzeichnet, dass** pro einem Mol an vorhandenen Urethangruppen und/oder Harnstoffgruppen der Ausgangsverbindung 0,1 bis 1,0 mol Butylisocyanat, Hexylisocyanat oder 3-Isocyanatopropyltrimethoxysilan eingesetzt werden.

5. Verwendung der gemäß Ansprüchen 1 bis 4 erhaltenen alkoxysilangruppenhaltigen Polyurethanen bei der Herstellung von Beschichtungen, Primern, Kleb- oder Dichtstoffen.

## Claims

1. Process for preparing alkoxysilane-functional polyurethane prepolymers with allophanate and/or biuret structures, at least 10 mol% of whose allophanate and/or biuret structures derive from butyl isocyanate or hexyl isocyanate, as non-functional monoisocyanates, or 3-isocyanatopropyltrimethoxysilane, as an alkoxysilane-functional monoisocyanate, in which
either
A) some or all urethane groups and/or urea groups of an alkoxysilane-functional polyurethane prepolymer are reacted with butyl isocyanate, hexyl isocyanate or 3-isocyanatopropyltrimethoxysilane to allophanate groups and/or biuret groups,
or
B) some or all urethane groups and/or urea groups of an alkoxysilane-free polyurethane prepolymer are reacted with 3-isocyanatopropyltrimethoxysilane to allophanate groups and/or biuret groups.

2. Process according to Claim 1, **characterized in that** catalysts are used as well.

3. Process according to Claim 2, **characterized in that** zinc octoate (zinc 2-ethylhexanoate) or tetraalkylammonium compounds are used as catalyst.

4. Process according to any one of Claims 1 to 3, **characterized in that** for each mole of urethane groups and/or urea groups present in the starting compound there is 0.1 to 1.0 mol of butyl isocyanate, hexyl isocyanate or 3-isocyanatopropyltrimethoxysilane.

5. Use of the alkoxysilane-functional polyurethanes obtained according to Claims 1 to 4 in the production of coatings, primers, adhesives or sealants.

## Revendications

1. Procédé de fabrication de prépolymères de polyuréthane contenant des groupes alcoxysilane comprenant des structures allophanate et/ou biuret, dont les structures allophanate et/ou biuret sont dérivées à hauteur d'au moins 10 % en moles d'isocyanate de butyle ou d'isocyanate d'hexyle en tant que monoisocyanates non fonctionnels ou de 3-isocyanatopropyltriméthoxysilane en tant que monoisocyanate à fonction alcoxysilane, selon lequel
soit
A) des groupes uréthane et/ou des groupes urée d'un prépolymère de polyuréthane contenant des groupes alcoxysilane sont transformés en totalité ou en partie avec de l'isocyanate de butyle, de l'isocyanate d'hexyle ou du 3-isocyanatopropyltriméthoxysilane en groupes allophanate ou en groupes biuret,
soit
B) des groupes uréthane et/ou des groupes urée d'un prépolymère de polyuréthane exempt de groupes alcoxysilane sont transformés en totalité ou en partie avec du 3-isocyanatopropyltriméthoxysilane en groupes allophanate ou en groupes biuret.

2. Procédé selon la revendication 1, **caractérisé en ce que** des catalyseurs sont utilisés.

3. Procédé selon la revendication 2, **caractérisé en ce que** de l'octoate de zinc (2-éthylhexanoate de zinc) ou des composés de tétraalkylammonium sont utilisés en tant que catalyseur.

4. Procédé selon l'une quelconque des revendications 1 à 3, **caractérisé en ce que**, par mole de groupes uréthane et/ou de groupes urée présents du composé de départ, 0,1 à 1,0 mole d'isocyanate de butyle, d'isocyanate d'hexyle ou de 3-isocyanatopropyltriméthoxysilane est utilisé.

5. Utilisation des polyuréthanes contenant des groupes alcoxysilane obtenus selon les revendications 1 à 4 lors de la fabrication de revêtements, d'apprêts primaires, d'adhésifs ou d'agents d'étanchéité.
